(19) Europäisches Patentamt
European Patent Office
Office européen des brevets

(11) **EP 3 988 692 A1**

(12) **EUROPEAN PATENT APPLICATION**
published in accordance with Art. 153(4) EPC

(43) Date of publication:
**27.04.2022 Bulletin 2022/17**

(21) Application number: **20825957.2**

(22) Date of filing: **17.06.2020**

(51) International Patent Classification (IPC):
*D01F 9/12* (2006.01)          *C04B 35/52* (2006.01)
*C04B 35/83* (2006.01)          *C01B 32/05* (2017.01)

(52) Cooperative Patent Classification (CPC):
**C01B 32/05; C04B 35/52; C04B 35/83; D01F 9/12**

(86) International application number:
**PCT/JP2020/023872**

(87) International publication number:
**WO 2020/256040 (24.12.2020 Gazette 2020/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.06.2019 JP 2019113310**

(71) Applicants:
• **Fine Sinter Co., Ltd.**
**Kasugai-shi, Aichi 480-0303 (JP)**
• **CFC Design Inc.**
**Sabae-shi, Fukui 916-0054 (JP)**

(72) Inventors:
• **KUBOTA, Yoshitaka**
**Kokubunji-shi, Tokyo 185-8540 (JP)**

• **MIYAHIRA, Yuki**
**Kokubunji-shi, Tokyo 185-8540 (JP)**
• **HASEGAWA, Koji**
**Kasugai-shi, Aichi 480-0303 (JP)**
• **YOSHII, Tatuya**
**Kasugai-shi, Aichi 480-0303 (JP)**
• **AMANO, Rei**
**Kasugai-shi, Aichi 480-0303 (JP)**
• **KODAMA, Yuu**
**Kasugai-shi, Aichi 480-0303 (JP)**
• **KAMEZAKI, Akio**
**Sabae-shi, Fukui 916-0054 (JP)**
• **SHIMASAKI, Yuka**
**Sabae-shi, Fukui 916-0054 (JP)**

(74) Representative: **Müller-Boré & Partner
Patentanwälte PartG mbB
Friedenheimer Brücke 21
80639 München (DE)**

(54) **CURRENT-COLLECTING SLIDING MATERIAL AND METHOD FOR PRODUCING SAME**

(57)    The present invention provides a current-collecting sliding material obtained by infiltrating a metal material containing copper and titanium in a carbon base material configured to contain a carbon composite fiber composed of carbon fiber and a matrix.

Fig. 1

PY_UD sheet

A matrix component is applied beforehand to a bundle of 12,000 carbon fibers having a diameter of about 7 μm, followed by coating with a resin (preformed yarn). The preformed yarn is woven as the weft yarn to form a sheet.

A PY_UD sheet 0°/90° laminate

**Description**

Technical Field

The present invention relates to a current-collecting sliding material and a production method thereof.

Background Art

In general, railway vehicles are driven by taking electrical energy from an overhead wire through a current collector such as a pantograph.

Since the pantograph is in contact with and slides along an overhead wire when a railway vehicle moves, the portion at which the pantograph is in contact with the overhead wire is generally covered with a sliding shoe (hereinafter referred to as a current-collecting sliding material) having excellent abrasion resistance or the like.

Properties required for such current-collecting sliding materials include lubricity to minimize the abrasion of an overhead wire, and excellent electrical conductivity to efficiently take in electric power from the overhead wire, in addition to excellent abrasion resistance.

As such current-collecting sliding materials, the carbon material disclosed in Patent Literature 1 can be suitably used. The carbon material, which has high lubricity, is less aggressive to overhead wires. Moreover, since the carbon material has high electrical conductivity and extremely high abrasion resistance, it is believed that the use of the carbon material disclosed in Patent Literature 1 as a base material enables the obtainment of a high-performance current-collecting sliding material.

However, the carbon material disclosed in Patent Literature 1 contains a large amount of expensive carbon fibers, which increases the production cost, leading to a problem in terms of cost-effectiveness.

Citation List

Patent Literature

PTL 1: JP2000-281446A

Summary of Invention

Technical Problem

In view of the circumstances described above, an object of the present invention is to provide a current-collecting sliding material that contains less carbon fiber but provides performance equivalent to that of conventional current-collecting sliding materials using carbon fiber.

Solution to Problem

As a result of extensive research to achieve the above object, the present inventors have found that a current-collecting sliding material that contains less carbon fiber but provides performance that is equivalent to that of conventional current-collecting sliding materials using carbon fiber can be obtained by infiltrating a metal material containing copper and titanium into a carbon composite fiber composed of carbon fiber and a matrix. Based on such findings, the present inventors conducted further research and accomplished the present invention.

Specifically, the present invention provides the following current-collecting sliding material.

1. A current-collecting sliding material obtained by infiltrating a metal material containing copper and titanium into a carbon base material configured to contain a carbon composite fiber composed of carbon fiber and a matrix.

2. The current-collecting sliding material according to Item 1, wherein the metal material contains copper and titanium in a mass ratio of copper:titanium = 90:10 to 70:30.

3. The current-collecting sliding material according to Item 1 or 2, wherein the infiltration rate of the metal material is 50 to 95%.

4. A method for producing a current-collecting sliding material, comprising infiltrating a metal material containing copper and titanium into a carbon base material configured to contain a carbon composite fiber composed of carbon fiber and a matrix under temperature conditions of 900 to 1100°C.

5. The production method according to Item 4, wherein the metal material contains copper and titanium in a mass ratio of copper:titanium = 90:10 to 70:30.

Advantageous Effects of Invention

The present invention can provide a current-collecting sliding material that contains less carbon fiber but provides performance equivalent to that of conventional current-collecting sliding materials using carbon fiber.

Brief Description of Drawings

Fig. 1 is a schematic view of a carbon base material used in Examples 1 to 11.
Fig. 2 is a schematic view of a carbon base material used in Examples 12 to 14.
Fig. 3 is a schematic view of a carbon base material used in Examples 15 to 18.

Description of Embodiments

Current-collecting sliding material

The current-collecting sliding material of the present invention is a current-collecting sliding material obtained by infiltrating a metal material containing copper and titanium into a carbon base material. The carbon base material is configured to contain a carbon composite fiber composed of carbon fiber and a matrix.

Known carbon fiber materials can be widely used as the material of carbon fibers without any limitations. Specifically, any of polyacrylonitrile-based (PAN-based), rayon-based, and pitch-based carbon fibers can be suitably used. Additionally, any of yarns that have been subjected to a flame-resistant treatment, yarns that have been subjected to a carbonization treatment, and yarns that have been subjected to graphitization can be suitably used.

Carbon fibers are preferably in the form of a continuous carbon fiber tow. The continuous carbon fiber tow is preferably a bundle of filaments of carbon fibers having an average diameter of 7 $\mu$m. The continuous carbon fiber tow is preferably formed of a bundle of 1000 to 24000 filaments, and more preferably 3000 to 12000 filaments.

Chopped carbon fibers are also preferable as the form of carbon fibers other than the continuous carbon fiber tow. Chopped carbon fibers are preferably carbon fibers having a length of 1 to 50 mm. The length of the carbon fibers, however, is not limited thereto.

In order to achieve excellent adhesion with a matrix described below, the surface of carbon fibers is preferably subjected to a surface oxidation treatment, such as an electrolytic surface treatment; or in order to bundle carbon fibers as a fiber bundle, adhering a sizing agent having a functional group such as an epoxy group, a hydroxy group, an acrylate group, a methacrylate group, a carboxyl group, or a carboxylic anhydride group to the surface of the carbon fibers is also preferred.

A matrix component constituting a matrix is not particularly limited as long as the component is capable of reinforcing carbon fibers by curing, and known components can be widely used. Specifically, a mixture of a petroleum- and/or coal-based binder pitch powder having softening property and a petroleum and/or coal-based coke powder having no softening property is preferred.

Usable examples of the petroleum- and/or coal-based binder pitch powder having softening property include isotropic, latent anisotropic, or anisotropic binder pitch derived from petroleum and/or coal having a softening temperature in the range of 60 to 320°C, a quinoline insoluble content of 0 to 80 mass%, and a volatile content of 10 to 60 mass%.

Examples of such binder pitch include pitch obtained by subjecting a petroleum-based heavy oil, such as a petroleum atmospheric residue, a vacuum residue, or catalytic cracking oil; or a coal-based heavy oil, such as coal tar or oil sand to a heat treatment at a high temperature (350 to 500°C). In addition, a mesophase microsphere obtained from such pitch, or a bulk mesophase obtained by coalescence and growth of the mesophase microsphere is also preferably used.

The petroleum- and/or coal-based binder pitch powder having softening property is preferably used for binding reinforcing fibers (carbon fibers) and a below-described petroleum- and/or coal-based coke powder having no softening property, which is used as an aggregate. The petroleum- and/or coal-based binder pitch powder having softening property preferably has an average particle size of 0.5 to 60 $\mu$m, and more preferably 3 to 20 $\mu$m.

The petroleum- and/or coal-based coke powder having no softening property preferably serves as an aggregate, and those having no softening point and a volatile content of 10 mass% or less, and preferably 2 mass% or less may be suitably used. As the coke powder, a petroleum-based powder or a coal-based coke powder can both be suitably used, and the average particle size is preferably 0.5 to 30 $\mu$m, and more preferably 1 to 20 $\mu$m.

The mixing ratio of the petroleum- and/or coal-based binder pitch powder having softening property to the petroleum- and/or coal-based coke powder having no softening property is not particularly limited. The mixing ratio of binder pitch/coke is preferably 90/10 to 10/90, and more preferably 70/30 to 30/70 in terms of mass ratio.

As a solvent to be added to a mixture comprising a binder pitch powder, coke powder, and binder, water or an organic solvent such as alcohol can be used.

Specific examples of the carbon composite fiber composed of carbon fiber and a matrix include the carbon/carbon composite materials disclosed in JP2017-8272A. Of these, an intermediate material obtained by the preformed yarn production method disclosed in paragraphs [0027] and [0028] of the specification of JP2017-8272A is particularly preferred.

Specific examples of such carbon composite fibers include intermediate materials in which a mixture of petroleum- and/or coal-based binder pitch powder having softening property and petroleum- and/or coal-based coke powder having no softening property, and a continuous carbon fiber tow are encapsulated into a sleeve made of a thermoplastic resin film such as polypropylene or nylon, and the mixture of a petroleum- and/or coal-based binder pitch powder having softening property and a petroleum- and/or coal-based coke powder having no softening property is dispersed and arranged in a large amount of carbon fibers.

The carbon fiber content in the carbon composite fiber is preferably 10 to 45% by volume, and more preferably 10 to 35% by volume in 100% by volume of the carbon composite fiber. The matrix content in the carbon composite fiber is preferably 35 to 80% by volume, and more preferably 40 to 75% by volume in 100% by volume of the carbon composite fiber. By taking such a structure, a carbon base material when formed has excellent strength properties.

The carbon fiber content in the carbon base material is preferably 15 to 50% by volume, and more preferably 15 to 40% by volume in 100% by volume of the carbon base material. The matrix content in the carbon base material is preferably 30 to 75% by volume, and more preferably 45 to 70% by volume in 100% by volume of the carbon base material. Such a structure allows the formation of a sufficient amount of voids in the carbon composite fiber, which allows a sufficient metal material to infiltrate into the pores of the carbon base material in the infiltration of the metal material. This ensures excellent properties as a current-collecting sliding material.

The embodiment for forming the carbon base material from the carbon composite fiber is not particularly limited. Examples include a carbon fiber sheet in which the carbon composite fiber obtained by the preformed yarn method described above is woven with a thermoplastic resin fiber yarn to form a sheet.

The carbon fiber sheet is preferably formed into a laminate by laminating multiple carbon fiber sheets according to the strength etc. required for the current-collecting sliding material.

When the carbon base material is a laminate of carbon fiber sheets, in order to make the strength in the X direction and the Y direction isotropic, carbon fiber sheets are preferably laminated in such a manner that the alignment direction of the carbon fibers contained in each of the carbon fiber sheets is oriented X-Y in an alternating manner (in other words, crossed at 90°) .

The number of layers can be appropriately determined according to required product dimensions without particular limitation. Specifically, 5 to 150 layers are preferred, and 50 to 100 layers are more preferred.

The thickness of the carbon fiber sheet is preferably 0.5 to 10 mm, and more preferably 1 to 5 mm from the viewpoint of attaining excellent formability and workability in the subsequent hot pressing step.

When the laminate of carbon fiber sheets is formed and used as a carbon base material, a chopped carbon fiber nonwoven fabric is preferably interposed in the laminate of carbon fiber sheets. Such a structure allows the strength in the plate plane directions to be more isotropic.

Chopped fibers used in chopped carbon fibers are not particularly limited as long as they are carbon fibers that are generally acknowledged as having a short length. Specifically, carbon fibers having an average length of 1 to 100 mm, and more specifically 1 to 50 mm can be used. There is no limitation on the thickness of the chopped carbon fiber; for example, the average diameter is preferably 5 to 10 $\mu$m.

The current-collecting sliding material of the present invention is obtained by infiltrating a metal material containing copper and titanium into the carbon base material. In particular, the use of a carbon base material produced by using a carbon composite fiber obtained by the above-described preformed yarn production method allows the formation of continuous voids between intermediate materials, which produces room for a metal material to enter the voids in the infiltration. As a result, the yield rate in the production of the current-collecting sliding material is increased.

When a copper-titanium alloy is infiltrated into the carbon base material, the copper-titanium alloy is compounded into a carbon base material through the infiltration step. As a metal material for infiltration, a copper-titanium alloy may be used or a mixture of copper and titanium may be used. In particular, in order to increase productivity by reducing the volume of the metal material to be infiltrated to the greatest extent possible, a green compact obtained by compressing and molding a mixture comprising a copper powder and a titanium powder is preferably used as the metal material used in the infiltration.

The metal material preferably contains copper and titanium in an amount of 90 mass% or more, and more preferably 95 mass% or more in 100 mass% of the metal material. The upper limit of the copper and titanium contained in the metal material is not particularly limited, and is preferably 100 mass%.

In order to obtain the high infiltration rate of the metal material by ensuring excellent wettability of the carbon base material, titanium is preferably contained in an amount of 10 mass% or more in the total (100 mass%) of copper and titanium. Further, in view of cost benefit as a current-collecting sliding material, the amount of titanium in the total (100 mass%) of copper and titanium is preferably 30 mass% or less. Thus, it is preferable to contain copper and titanium in a mass ratio of copper:titanium = 90:10 to 70:30, and more preferably copper:titanium = 85:15 to 75:25. Such a structure allows a sufficient metal material to infiltrate into the carbon base material, which ensures excellent current-collecting properties and abrasion properties as the current-collecting sliding material.

The mixing ratio of copper and titanium contained in the metal material does not change before and after the infiltration step.

In addition to the copper powder and titanium powder described above, the metal material preferably contains at least one member selected from the group consisting of Sn, Zn, Al, Ni, and Mn as a component that forms an alloy with copper to the extent that the effect of the present invention is not impaired.

In the current-collecting sliding material of the present invention obtained through the infiltration step, the infiltration rate of the copper titanium alloy into the carbon base material is preferably 50 to 95%, and more preferably 70 to 90%. Such a structure attains excellent current-collecting properties and abrasion properties as a current-collecting sliding material.

In this specification, the method for calculating the infiltration rate is defined as follows. First, the volume percentage of pores is determined based on the following equation (1) using the true density of the carbon base material and the density of the carbon base material, which are calculated according to JIS R1634. Subsequently, the density of the current-collecting sliding material, which is formed by infiltrating a metal material into the same carbon base material is determined. Based on the density of the current-collecting sliding material, the density of the carbon base material, and the true density of the infiltrated metal material, the volume percentage of the actually infiltrated metal material is obtained according to equation (2). Based on the obtained volume percentage of the pores of the carbon base material and volume percentage of the infiltrated metal material, the infiltration rate percentage can be obtained according to equation (3).

$$\text{Equation (1): Pore volume percentage } (V0) = (1 - \rho0/\rho t0) \times 100$$

$\rho0$:    Density of the carbon base material (g/cm$^3$)
$\rho t0$:    True density of the carbon base material (g/cm$^3$)

$$\text{Equation (2): Volume percentage of infiltrated metal material}$$
$$(V1) = (\rho1 - \rho0) \times 100/\rho t1$$

$\rho1$:    Density of current-collecting sliding material (g/cm$^3$)
$\rho t1$:    True density of metal material (g/cm$^3$)

$$\text{Equation (3): Infiltration rate percentage } = (V1/V0) \times 100$$

Production method of current-collecting sliding material

The present invention includes an invention relating to the method for producing a current-collecting sliding material. The method for producing a current-collecting sliding material according to the present invention involves infiltrating a metal material containing copper and titanium into the above-described carbon base material.

Those described above can be used as the carbon base material and the metal material. In particular, by using a green compact obtained by compressing and molding a mixture containing a copper powder and a titanium powder as the metal material, the volume of the infiltrated metal material is reduced to the greatest extent possible to increase productivity. The compression pressure (surface pressure) is preferably about 3 to 6 ton/cm$^2$. In view of handling, the density of the green compact is preferably 4.5 g/cm$^3$ or more. The upper limit of the density of the green compact is not particularly limited; for example, it is preferably 7.0 g/cm$^3$.

As already mentioned, a preferable carbon base material to be used is a laminate of carbon fiber sheets. Moreover, the laminate containing chopped carbon fiber nonwoven fabrics is preferably used. Specifically, by pressurizing under heating a laminate containing carbon fiber sheets arranged in the X and Y directions, or a laminate containing chopped carbon fiber nonwoven fabrics between carbon fiber sheets at a fixed proportion, using a hot press or the like, the intermediate laminate of carbon/carbon composite material can be formed. By calcinating the intermediate laminate to a carbonization temperature or a graphitization temperature, a carbon base material comprising a laminate of carbon/carbon composite material can be obtained.

The nonwoven fabric using chopped carbon fibers is a sheet-like material in which chopped carbon fibers are interwound without weaving carbon fibers, and can be obtained using a conventionally known paper-making technology by a method in which carbon fibers are dispersed in water, and the resultant was taken up with a mesh net, followed by drying.

It is preferable that the green compact is substantially in the same form as the surface of the carbon base material so that the copper titanium alloy is infiltrated into the entire carbon base material in an excellent manner. The green compact can have any thickness, and the thickness can be suitably determined according to the thickness of the carbon base material and the volume percentage of pores.

The copper powder and titanium powder preferably have a purity of 99 mass% or more. The copper powder preferably has a particle size, which is measured by sieve analysis specified in JISZ2510, of less than 150 $\mu$m, and more preferably less than 45 $\mu$m. The lower limit of the particle size of the copper powder or the titanium powder is not particularly limited, and the particle size measured by the sieve analysis is preferably 5 $\mu$m for copper powder and 1 $\mu$m for titanium powder. Regarding the mixing ratio, the copper powder and the titanium powder are preferably contained in a mass ratio of copper powder:titanium powder = 90:10 to 70:30, and more preferably in a mass ratio of copper powder:titanium powder = 85:15 to 75:25. Such a structure allows a sufficient metal material to infiltrate into the carbon base material, which attains sufficient current-collecting properties and abrasion properties as the current-collecting sliding material.

Regarding the amount of copper powder and titanium powder to be used, the total amount of copper and titanium is preferably 30 to 60 parts by mass, and more preferably 35 to 50 parts by mass, relative to 100 parts by mass of the carbon base material. Such a structure attains an effect of obtaining a current-collecting sliding material having excellent electrical conductivity and high performance while maintaining lubricity to suppress abrasion of overhead wires to the greatest extent possible.

In addition to the copper powder and titanium powder described above, the metal material preferably contains at least one member selected from the group consisting of Sn, Zn, Al, Ni, and Mn to the extent that the effect of the present invention is not impaired.

The temperature conditions in the infiltration are 900 to 1100°C, and more preferably 920 to 1050°C. If the infiltration temperature is less than 900°C, the melting point of the metal material composed of copper and titanium is not attained, and thus, the metal material cannot be infiltrated into the carbon material. In contrast, if the infiltration temperature exceeds 1100°C, the melting of the metal material composed of copper and titanium overly proceeds; and the metal material flows down from the carbon material, and is not infiltrated into the carbon material.

The embodiments of the present invention are not limited to these examples; and various embodiments can of course be exercised as long as they do not deviate from the gist of the present invention.

Examples

The embodiments of the present invention are described in more detail below based on Examples; however, the present invention is not limited to these Examples.

Carbon base material for Examples 1 to 11

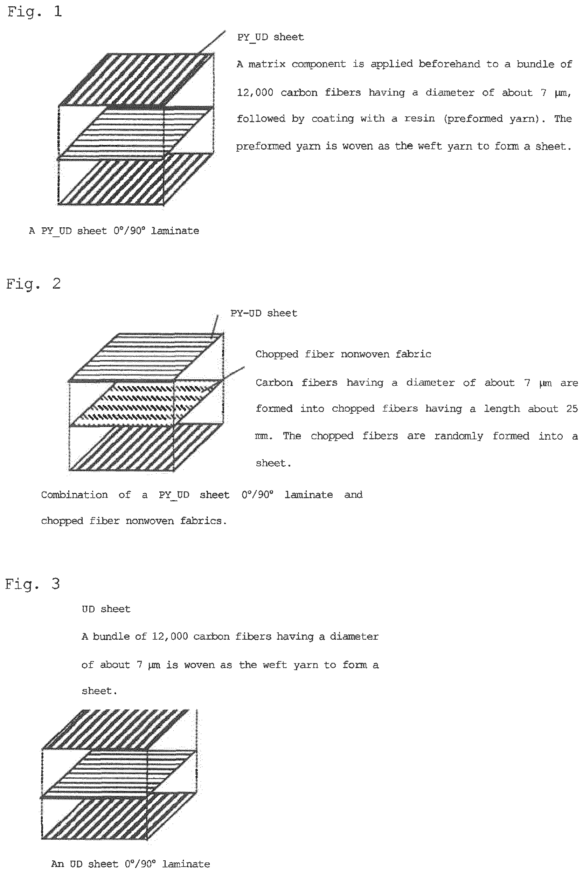

A mixture of a coal-based binder pitch powder and a coal-based coke powder was adhered as a matrix component to a bundle of 12,000 polyacrylonitrile (PAN)-based carbon fibers (average diameter: 7 $\mu$m), thus obtaining a preformed yarn. The preformed yarn was aligned in one direction as the warp yarn, and a thermoplastic resin fiber was used as the weft yarn to form sheets. The obtained carbon fiber sheets were laminated in such a manner that the alignment direction of the carbon fibers contained in each of the carbon fiber sheets was oriented X-Y in an alternating manner, as shown in Fig. 1, thus obtaining a laminate (size 250 x 250 x 100 mm). The number of layers was set to 50 in all of the Examples. The laminate was molded by heating with a hot press, and subjected to a carbonization treatment in a batch furnace, thus obtaining a carbon base material comprising a laminate of carbon/carbon composite material. The obtained carbon base material was cut by machining into a size of 200 x 25 x 25 mm.

Carbon base material for Examples 12-14

In Examples 12 to 14, a non-woven fabric formed of chopped carbon fibers was interposed. Specifically, the same preformed yarn as those obtained in the above Examples 1 to 11 was laminated so that the alignment directions of the carbon fibers were the X direction and Y direction, and then the chopped fiber nonwoven fabric was applied thereto. This procedure was repeated until the number of layers was 50, thus obtaining a carbon base material (Fig. 2).

The chopped fiber nonwoven fabric was obtained by a method in which carbon fibers having an average diameter of about 7 $\mu$m and an average length of 25 mm were dispersed in water, and the resultant was taken up with a mesh net, followed by drying.

Carbon base material for Examples 15 to 18

A bundle of 12,000 polyacrylonitrile (PAN)-based carbon fibers (average diameter: 7 $\mu$m) was woven into a sheet with a thermoplastic resin fiber. A matrix component (a dispersion of a coal-based binder pitch powder and a coal-based coke powder) was applied to the obtained carbon fiber sheets, and the sheets were laminated in such a manner that the alignment direction of the carbon fibers in each of the carbon fiber sheets was oriented X-Y in an alternating manner, thus obtaining a laminate (size 250 x 250 x 50 mm) (Fig. 3). The number of layers was set to 50. The laminate was molded by heating with a hot press, and subjected to a carbonization treatment in a batch furnace, thus obtaining a carbon base material comprising a laminate of carbon/carbon composite material. The obtained carbon base material was cut by machining into a size of 200 $\times$ 25 $\times$ 25 mm.

The copper powder having an average particle size of 40 $\mu$m and the titanium powder having an average particle size of 20 $\mu$m were mixed in the mixing ratio shown in Table 1 below, and the mixture was introduced into a mold, and molded at 4 ton/cm$^2$, thus obtaining a green compact (size 200 x 25 x 5 mm). The green compact was placed on each of the carbon base materials, followed by infiltration under a reducing atmosphere at the temperature conditions shown in Table 1 below, thus obtaining current-collecting sliding materials (size 200 x 25 x 25 mm) of the Examples.

Measurement of infiltration rate

The infiltration rate of each Example was calculated based on the method described above.

Evaluation of electrical resistivity

A test piece of 60 x 10 x 10 mm was cut from the current-collecting sliding material, and a constant current of 2.0 A was applied in the longitudinal direction of the test piece using a constant current generator. Terminals having a terminal distance of 1.5 mm were pressed against the test piece, and the average voltage was measured by measuring the voltage between the terminals at several points. The average voltage was multiplied with the cross-sectional area of the test piece, and then divided by the terminal distance and current, thus obtaining electrical resistivity.

Abrasion resistance test

The current-collecting sliding materials of the Examples and Comparative Examples were subjected to machining to obtain test pieces each having a size of 25 x 25 x 10 mm. By fitting 6 mm-wide tough-pitch copper into a disc-shaped support disc, a simulated round trolley wire having a diameter of 380 mm was prepared.

The support disk was rotated, and the speed was set to 25 km/h. Each of the test pieces was pressed against the simulated trolley wire at 49N. During sliding, a DC current of 200 A was applied to the test piece.

The sliding time was 400 seconds, and a cycle of 1 second of sliding time and 1 second of pause time was repeated 400 times. The abrasion resistance was evaluated as follows. The weight of the test piece before and after the test was measured, and the volume abrasion amount was calculated based on the density of the test piece measured in advance, and divided by the pressing force and the sliding distance, thus obtaining the specific abrasion amount.

Table 1

| | Carbon base material (vol%) | | | Laminate structure | Infiltration metal (mass%) | | | Infiltration rate of metal | Electrical resistance rate | Specific abrasion rate |
|---|---|---|---|---|---|---|---|---|---|---|
| \ | Carbon fiber content | Matrix | Pore | | Ti | Cu | Infiltration temperature (°C) | % | $\mu\Omega$ m | $10^6$mm$^3$/ N·m |
| Example 1 | 15 | 75 | 10 | PY_UD sheet 0° /90° lamination | 15 | 85 | 1000 | 52 | 2.5 | 4.88 |
| Example 2 | | | | | | | 1050 | 40 | 2.8 | 5.50 |
| Example 3 | 15 | 70 | 15 | PY_UD sheet 0° /90° lamination | 20 | 80 | 950 | 65 | 2.0 | 1.66 |
| Example 4 | | | | | 15 | 85 | 1000 | 60 | 2.1 | 2.22 |
| Example 5 | 20 | 70 | 10 | PY_UD sheet 0° /90° lamination | 25 | 75 | 900 | 58 | 2.2 | 3.50 |
| Example 6 | | | | | 20 | 80 | 950 | 70 | 1.8 | 1.30 |
| Example 7 | | | | | 15 | 85 | 1000 | 65 | 1.7 | 1.88 |
| Example 8 | 20 | 65 | 15 | PY UD sheet 0° /90° lamination | 20 | 80 | 950 | 82 | 1.5 | 1.33 |
| Example 9 | | | | | 15 | 85 | 1000 | 70 | 1.6 | 2.55 |
| Example 10 | 30 | 50 | 20 | PY_UD sheet 0° /90° lamination | 20 | 80 | 950 | 81 | 1.1 | 2.02 |
| Example 11 | | | | | 15 | 85 | 1000 | 69 | 1.5 | 3.32 |
| Example 12 | 15 | 70 | 15 | PY_UD sheet/chopped fiber nonwoven fabric lamination | 20 | 80 | 950 | 63 | 2.1 | 1.98 |

(continued)

| | Carbon base material (vol%) | | | Laminate structure | Infiltration metal (mass%) | | | Infiltration rate of metal | Electrical resistance rate | Specific abrasion rate |
|---|---|---|---|---|---|---|---|---|---|---|
| | Carbon fiber content | Matrix | Pore | | Ti | Cu | Infiltration temperature (°C) | % | $\mu\Omega\cdot m$ | $10^6 mm^3/N\cdot m$ |
| Example 13 | 20 | 65 | 15 | PY_UD sheet/chopped fiber nonwoven fabric lamination | 20 | 80 | 950 | 78 | 1.4 | 1.35 |
| Example 14 | | | | | 15 | 85 | 1000 | 68 | 1.8 | 1.95 |
| Example 15 | 40 | 45 | 15 | UD sheet 0°/90° lamination | 30 | 70 | 900 | 75 | 1.8 | 1.85 |
| Example 16 | | | | | 20 | 80 | 950 | 80 | 1.1 | 1.43 |
| Example 17 | 50 | 30 | 20 | UD sheet 0°/90° lamination | 15 | 85 | 1000 | 60 | 1.5 | 1.72 |
| Example 18 | | | | | 15 | 85 | 1000 | 68 | 1.4 | 2.05 |

**Claims**

1.  A current-collecting sliding material obtained by infiltrating a metal material containing copper and titanium into a carbon base material configured to contain a carbon composite fiber composed of carbon fiber and a matrix.

2.  The current-collecting sliding material according to claim 1, wherein the metal material contains copper and titanium in a mass ratio of copper:titanium = 90:10 to 70:30.

3.  The current-collecting sliding material according to claim 1 or 2, wherein the infiltration rate of the metal material is 50 to 95%.

4.  A method for producing a current-collecting sliding material, comprising infiltrating a metal material containing copper and titanium into a carbon base material configured to contain a carbon composite fiber composed of carbon fiber and a matrix under temperature conditions of 900 to 1100°C.

5.  The production method according to claim 4, wherein the metal material contains copper and titanium in a mass ratio of copper:titanium = 90:10 to 70:30.

Fig. 1

PY_UD sheet

A matrix component is applied beforehand to a bundle of 12,000 carbon fibers having a diameter of about 7 µm, followed by coating with a resin (preformed yarn). The preformed yarn is woven as the weft yarn to form a sheet.

A PY_UD sheet 0°/90° laminate

Fig. 2

PY-UD sheet

Chopped fiber nonwoven fabric

Carbon fibers having a diameter of about 7 µm are formed into chopped fibers having a length about 25 mm. The chopped fibers are randomly formed into a sheet.

Combination of a PY_UD sheet 0°/90° laminate and chopped fiber nonwoven fabrics.

Fig. 3

UD sheet

A bundle of 12,000 carbon fibers having a diameter of about 7 µm is woven as the weft yarn to form a sheet.

An UD sheet 0°/90° laminate

# EP 3 988 692 A1

## INTERNATIONAL SEARCH REPORT

International application No.

PCT/JP2020/023872

A. CLASSIFICATION OF SUBJECT MATTER
D01F 9/12(2006.01)i; C04B 35/52(2006.01)i; C04B 35/83(2006.01)i; C01B
32/05(2017.01)i
FI: C04B35/83; D01F9/12; C01B32/05; C04B35/52
According to International Patent Classification (IPC) or to both national classification and IPC

B. FIELDS SEARCHED

Minimum documentation searched (classification system followed by classification symbols)
D01F9/12; C04B35/52; C04B35/83; C01B32/05

| Documentation searched other than minimum documentation to the extent that such documents are included in the fields searched | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2000-281446 A (RAILWAY TECHNICAL RESEARCH INSTITUTE) 10.10.2000 (2000-10-10) example 5, paragraphs [0002]-[0006], [0130] | 1-5 |
| A | JP 57-198232 A (JAPANESE NATIONAL RAILWAYS) 04.12.1982 (1982-12-04) entire text | 1-5 |
| A | JP 49-116109 A (NIPPON CARBON CO., LTD.) 06.11.1974 (1974-11-06) entire text | 1-5 |
| P, A | CN 110436926 A (UNIV SOUTHWEST JIAOTONG) 12.11.2019 (2019-11-12) entire text | 1-5 |

☐ Further documents are listed in the continuation of Box C.   ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29 July 2020 (29.07.2020) | 18 August 2020 (18.08.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

| International application no. |
| --- |
| PCT/JP2020/023872 |

| Patent Documents referred in the Report | Publication Date | Patent Family | Publication Date |
| --- | --- | --- | --- |
| JP 2000-281446 A | 10 Oct. 2000 | US 6183667 B1 example 5, column 1, lines 6-56 EP 1041056 A2 ES 2234527 T | |
| JP 57-198232 A | 04 Dec. 1982 | (Family: none) | |
| JP 49-116109 A | 06 Nov. 1974 | US 3956568 A entire text DE 2411584 A1 | |
| CN 110436926 A | 12 Nov. 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000281446 A
- JP 2017008272 A